# EUROPEAN PATENT APPLICATION

(11) **EP 4 838 483 A1**
(43) Date of publication of application: **11.11.2026**
(21) Application number: 25305635.2
(22) Date of filing: 05.05.2025
(51) Int. Cl.: G06V 10/82, G06V 20/52

(54) **METHOD AND DEVICE FOR DETECTING AN ANOMALY IN A VIDEO USING MULTIPLE MODALITIES**

(71) Applicant: TOYOTA JIDOSHA KABUSHIKI KAISHA, Toyota-shi, Aichi-ken 471-8571 (JP); Institut National de Recherche en Informatique et en Automatique, 78153 Le Chesnay Cedex (FR)
(72) Inventor: FRANCESCA, Gianpiero, 1140 BRUSSELS (BE); GARATTONI, Lorenzo, 1140 BRUSSELS (BE); MAJHI, Snehashis, 06902 VALBONNE (FR); BREMOND, Francois, 06902 VALBONNE (FR); D'AMICANTONIO, Giacomo, 06902 VALBONNE (FR); KONG, Quan, CHUO-KU TOKYO, 103-0022 (JP)
(74) Representative: Cabinet Beau de Loménie

(57) **Abstract**

The present invention relates to a method and device for detecting an anomaly in a video (VID) using a machine learning model (MOD). In particular, the proposed method for comprises:
- a step of computing modality embeddings (ê_{P}, ê_{D}, êₜₓₜ, ê_{O}, ê_{M}) of the video (VID) among: a human pose embedding (ê_{P}), a depth embedding (ê_{D}), a text embedding (êₜₓₜ), a motion embedding (ê_{O}), and a segmentation embedding (ê_{M}),
wherein the modality embeddings (ê_{P}, ê_{D}, êₜₓₜ, ê_{O}, ê_{M}) are computed based on an intermediate feature map (F*) of the video (VID) using a modality generation module (PMG) of the machine learning model (MOD),
- a step of computing anomaly scores (S₁-S_{T}) for temporal segments (t₁-t_{T}) of the video (VID) based on the modality embeddings (ê_{P}, ê_{D}, êₜₓₜ, ê_{O}, ê_{M}).

## Description

### BACKGROUND OF THE INVENTION

### 1. Field of the invention

The present invention relates to the field of video anomaly detection. More particularly, the present invention relates to a method and device for detecting an anomaly in a video using a machine learning model. It also relates to a method for training a machine learning model, a surveillance system, and a computer program. The present invention is particularly advantageous for implementing autonomous surveillance systems, but such an application is only given as an illustrative example and should not limit the invention.

### 2. Description of Related Art

Video anomaly detection is a computer-vision task critical to numerous applications, such as autonomous surveillance systems. Typically, autonomous surveillance systems are used to monitor public spaces, factories, etc. The objective of such a surveillance system is to detect an anomaly in a video (e.g., an assault, a car accident or an explosion) to enable timely intervention.

The development of machine learning techniques led to considerable improvements in video anomaly detection. Still, implementing autonomous surveillance systems capable of detecting an anomaly in a video is particularly demanding. Video annotation requires a substantial amount of human effort. It is therefore difficult and costly to collect anomaly videos with precise temporal annotations to train machine learning models for video anomaly detection.

For this reason, it has previously been proposed to train machine learning models using normal and anomaly videos with video-level labels *(i.e.,* using weakly supervised learning). However, the reliability of weakly supervised methods for video anomaly detection can still be improved. In particular, these methods may not detect certain more complex humans-centric anomalies, such as shoplifting, theft, or abuse.

Therefore, there exists a need for a solution that can reliably detect anomalies in videos.

### SUMMARY

The present invention has been made in the light of the above problems.

According to an aspect, the present invention provides a (computer-implemented) method for detecting an anomaly in a video using a machine learning model, the method comprising:
- a step of computing one or more modality embeddings of the video among: a human pose embedding, a depth embedding, a text embedding, a motion embedding, and a segmentation embedding,
   wherein the one or more modality embeddings are computed based on an intermediate feature map of the video using a modality generation module of the machine learning model (also referred to as the "*pseudo-modality generation module*"), and this step comprises:
   ∘ a sub-step of computing an encoded feature map based on the intermediate feature map using an encoder of the modality generation module,
   ∘ a sub-step of computing the one or more modality embeddings based on the encoded feature map using respectively one or more decoders of the modality generation module,
- a step of computing anomaly scores for temporal segments of the video based on the one or more modality embeddings.

Within the context of the invention, we use the term "anomaly" to refer to a class of events considered as abnormal with respect to reference data. For example, the following events can be considered as anomalies: an explosion, a road accident, an assault, a fire.

Hereafter, the term "modalities" is used to refer to different types of features of the video that can be used to detect an anomaly. Each modality represents a distinct form of information that the detector uses to detect an anomaly. We consider not only the color modality of the video (*i.e.,* the RGB features), but also additional modalities including the following ones:
The "*human pose embedding*" encodes the position and/or orientation of human body joints (*e.g.,* shoulders, elbows, knees) in the video. The "*depth embedding*" encodes information representative of the distance of objects from the camera in the video. The "*text embedding*" corresponds to a representation in natural language of the scene captured in the video. The "*motion embedding*" encodes information representative of movements of objects and/or humans in the video (*i.e.,* optical flow). And the "*segmentation embedding*" encodes information representative of segmented regions of an image, each segment corresponding to a specific object or part of the scene filmed in the video. In particular, the segmentation embedding may be a panoptic segmentation embedding. The use of other additional modalities can be envisaged such as an audio embedding, a head position embedding, or an eye gaze embedding.

The present invention proposes using additional modalities (human pose, depth, text, motion, segmentation features) to detect an anomaly in a video.

Existing solutions are conventionally based merely on RGB features (*i.e.,* single-modality features). This limits their reliability in real-world scenarios. In contrast, the proposed solution uses additional modalities (human pose, depth, text, motion, segmentation features) to augment the RGB features of the video. This allows fully capturing the complexity of filmed scenes. The results of experiments conducted on standard datasets confirm that the proposed solution provides significant performance gains over existing solutions in terms of anomaly detection reliability.

In addition, the proposed solution allows computing the embeddings for the different modalities using only the modality generation module. Since this module takes as input an intermediate feature map of the video rather than the video directly, the modality generation module can be integrated at various places in the machine learning model (*i.e.,* the intermediate feature map can be provided by a visual encoder, or any other module of the proposed machine learning model). It follows that the proposed solution does not require the use of multiple backbones to extract the different modalities from the video directly. It therefore has a low complexity of implementation and can be deployed in practical systems. This is confirmed by the inventors' experiments.

Therefore, the present invention provides a low-complexity solution that allows detecting reliably anomalies.

According to an embodiment, the encoder of the modality generation module comprises a neural network, and/or the one or more decoders of the modality generation module comprises respectively a neural network.

This embodiment proposes using neural networks to implement the encoder-decoder structure of the modality generation module. The use of neural networks allows learning discriminative representations for the different modalities to detect anomaly in the video. This contributes to improving the reliability of the proposed solution.

According to an embodiment, the proposed method comprises:
- a step of computing a multi-modal feature map of the video based on the intermediate feature map and the one or more modality embeddings using a cross-modal module of the machine learning model (also referred to as the "*cross-modal induction module*")*.*

In this embodiment, the step of computing the anomaly scores for the temporal segments of the video is based on the multi-modal feature map.

Hereinafter, the term "*multi-modal*" is used to refer to a feature map or an embedding that includes multiple modalities of the video. In particular, the computed multi-modal feature map not only include RGB features, but also features from (all or part of) the other modalities (pose, depth, text, motion, segmentation).

In this embodiment, the modality embeddings are infused into the intermediate feature map by the cross-modal module. This allows augmenting the RGB features with the additional modalities to detect reliably an anomaly. This contributes to reliably detecting anomalies in videos, in particular complex human-centric anomalies.

According to an embodiment, the cross-modal module comprises one or more transformers.

This embodiment proposes using transformers to combine the modality embeddings with the intermediate feature map (*i.e.,* to augment the RGB features with the additional modalities). The use of transformers is particularly advantageous in that they allow capturing the relationships between the different modalities and the RGB features. This allows learning discriminative representations and detecting reliably anomalies in videos.

According to an embodiment, the step of computing the multi-modal feature map comprises:
- a sub-step of computing a multi-modal embedding based on the one or more modality embeddings using a transformer of the cross-modal module, and
- a sub-step of computing the multi-modal feature map based on a sum of the intermediate feature map and the multi-modal embedding using another transformer of the cross-modal module.

In this embodiment, a first transformer uses the different modality embeddings to provide a multi-modal embedding. This transformer allows encoding the cross-correlations between the different modalities and thereby highlighting the most pertinent modalities.

The multi-modal embedding is then added to the intermediate feature map. That is, the RGB features are augmented with relevant information from the different modalities.

A second transformer uses the sum of the multi-modal embedding and the intermediate feature map to compute the multi-modal feature map. This transformer creates a shared representation space (between the RGB modality and the additional ones) that promotes all relevant features for the video anomaly detection task.

This multi-modal feature provides a discriminative representation that benefits from the different modalities and allows detecting reliably anomalies in videos.

According to another aspect, the present invention provides a (computer-implemented) method for training a machine learning model for detecting an anomaly in a video, the method comprising a training phase including one or more iterations of:
- a step of computing anomaly scores for temporal segments of reference videos using the method according to the invention, the reference videos being labelled with video-level labels and including normal videos and anomaly videos,
- a step of evaluating a loss function including a loss component based on the computed anomaly scores for the reference videos,
- a step of updating parameters of the machine learning model to minimize the loss function.

The present invention proposes training the machine learning model using reference videos with video-level labels (*i.e.,* using weak supervision). Such a reference video is either labelled as normal or abnormal but, in the latter case, the anomaly is not localized temporally in the video.

The proposed training method allows optimizing the machine learning model to detect reliably anomalies in videos and to localize temporally these anomalies, using reference videos without any temporal annotations. This contributes to reducing the human labor required to train the proposed machine learning model for video anomaly detection.

According to an embodiment, the loss function includes a loss component based on:
- one or more modality embeddings of the reference videos computed using the method according to the invention, and
- one or more modality embeddings extracted from the reference videos respectively by one or more dedicated models (distinct from the proposed model).

In this embodiment, the proposed machine learning model is trained using distinct machine learning models respectively dedicated to extracting different modality embeddings (used as ground-truth embeddings). The loss function is based on the modality embeddings computed by the proposed model and the modality embeddings extracted by the dedicated models. This embodiment allows providing a modality generation module capable (once trained) of generating different modality embeddings, that can be used to augment the RGB features and improve anomaly detection reliability.

It should be reminded that the proposed machine learning model does not require the use of these dedicated models during inference (which are only necessary during training). Therefore, the proposed solution has low complexity of implementation and can be deployed in practical systems.

According to an embodiment, the loss function includes a loss component based on:
- one or more modality embeddings of the reference videos computed using the method of according to the invention, and
- an intermediate feature map of the reference videos.

In this embodiment, the loss function is based on the different modality embeddings and the intermediate feature map computed by the proposed machine learning model. This allows the different modality embeddings to be aligned with the RGB embeddings. Thereby, a latent space shared between the different modalities and the RGB embeddings can be learned. This contributes to improving the ability of the proposed model to effectively use the features of the different modalities for anomaly detection. Improved reliability follows as a result.

According to an embodiment, the loss function includes a loss component based on:
- a multi-modal feature map of the reference videos computed using the method according to the invention, and
- another feature map of the reference videos computed by a pre-trained model (distinct from the proposed model).

In this embodiment, a teacher-student approach is used. That is, the proposed machine learning model (*i.e.,* the student) is trained using a distinct machine learning model pre-trained for video anomaly detection (*i.e.,* the teacher). Specifically, the loss function compares the multi-modal feature map computed by the cross-modal module of the proposed model (*i.e.,* the student) with the multi-modal feature computed by the pre-trained model (*i.e.,* the teacher). This distillation process guides the multi-modal feature map computed by the proposed model towards a representation optimized for video anomaly detection. As a result, robust anomaly detection is achieved even with limited data and supervision.

According to an embodiment, the training method comprises a preliminary training phase including one or more iterations of:
- a step of computing one or more modality embeddings of the reference videos using a modality generation module of the machine learning model,
- a step of computing a multi-modal feature map of the reference videos using a cross-modal module of the machine learning model,
- a step of evaluating a preliminary loss function based on the computed one or more modality embeddings and the computed multi-modal feature map of the reference videos, and
- a step of updating parameters of the machine learning model to minimize the preliminary loss function.

This embodiment involves a preliminary training phase of the machine learning model, in particular of the modality generation module and the cross-modal module. This preliminary training phase allows these modules to be correctly initialized before specifically optimizing the machine learning model for the video anomaly detection task. This allows avoiding possible pitfalls in which one of the modalities could overpower the other ones. This embodiment contributes to providing a machine learning model capable (once trained) of reliably detecting anomalies in videos.

According to an embodiment, the modality embeddings comprise multiple or all embeddings among: the human pose embedding, the depth embedding, the text embedding, the motion embedding, and the segmentation embedding.

This embodiment emphasizes that multiple or even all modalities (pose, depth, text, motion, segmentation) are used to complement the RGB features. The experimental results show that the different modalities respectively contribute to improving the reliability of anomaly detection of the proposed solution.

According to an embodiment, the modality embeddings further comprise an audio embedding.

The use of the audio features as an additional modality according to this embodiment contributes to improving the reliability of the proposed solution.

According to another aspect, the present invention provides a device for detecting at least one anomaly in a video, the device comprising at least one processor and a memory, the device being configured to implement a machine learning model comprising:
- a modality generation module configured to compute one or more modality embeddings of the video among: a human pose embedding, a depth embedding, a text embedding, a motion embedding, and a segmentation embedding,
   wherein the modality generation module comprises:
   ∘ an encoder configured to compute an encoded feature map based on an intermediate feature map of the video, and
   ∘ one or more decoders configured respectively to compute the one or more modality embeddings based on the encoded feature map, and
- a detector configured to compute anomaly scores for temporal segments of the video based on the one or more modality embeddings.

According to an embodiment, the machine learning model has been trained using the training method conforming to the invention.

The proposed device may be configured, for (each) one of the temporal segments of the video, to detect an anomaly in this temporal segment if (and only if) the anomaly score for this temporal segment exceeds a threshold.

The proposed device may further be configured to provide an alarm signal if an anomaly is detected in the video. For example, the alarm signal indicates the detection of an anomaly. It may also comprise the images of the temporal segment associated with the anomaly.

More generally, the proposed detection device may be configured to implement any of the steps (and operations) described herein.

According to another aspect, the present invention provides a surveillance system comprising: a camera for obtaining a video, and a device according to the invention for detecting at least one anomaly in the video.

The surveillance system may further comprise an output device configured to output an alarm signal provided by the anomaly detection device. The output device may comprise a display and/or a speaker.

According to another aspect, the present invention provides a computer program comprising instructions which, when the program is executed by at least one processor or a computer, cause said at least one processor or computer to implement a method according to the invention for detecting an anomaly in a video, or the method according to the invention for training a machine learning model.

It should be noted that the computer program referred to here may use any programming language, and be in the form of source code, object code, or code intermediate between source code and object code, such as in a partially compiled form.

According to another aspect, the invention provides a computer-readable medium having stored thereon the computer program according to the invention.

The computer-readable medium referred to here may be any entity or device capable of storing the program and readable by any computer equipment, including a computer. For example, the medium may include a storage medium, or a magnetic storage medium, such as a hard drive. Alternatively, the storage medium may correspond to a computer integrated circuit in which the program is incorporated.

It should be emphasized that the proposed anomaly detection device, surveillance system, computer program, and medium present the advantages described above in relation with the proposed method for detecting an anomaly in a video.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates the architecture of a surveillance system according to an embodiment of the invention,
FIGS. 2A and 2B illustrate the architecture of a machine learning model and steps of a method for detecting an anomaly in a video according to an embodiment of the invention,
FIGS. 3A and 3B illustrate the architecture of the pseudo-modality generation module of the machine learning model and the steps implemented by this module according to an embodiment of the invention,
FIGS. 4A and 4B illustrate the architecture of the cross-modal induction module of the machine learning model and the steps implemented by this module according to an embodiment of the invention, and
FIGS. 5A, 5B, and 5C illustrate steps of a method for training a machine learning model used for detecting an anomaly in a video according to an embodiment of the invention.

### DETAILED DESCRIPTION OF EMBODIMENTS

The present invention is particularly advantageous for implementing a surveillance system. The following description of the invention will refer to this particular application, which is provided only as an illustrative example and should not limit the invention.

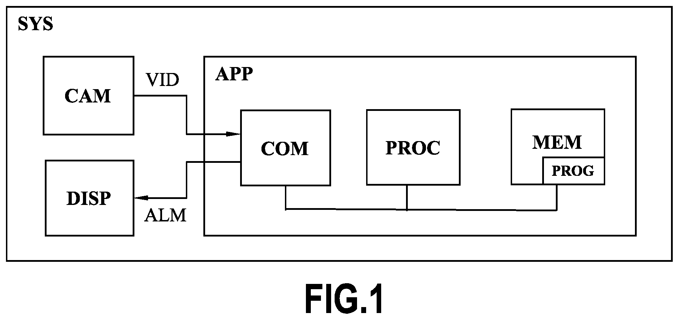

**FIG. 1** illustrates the architecture of a surveillance system according to an embodiment of the invention.

The surveillance system SYS of FIG. 1 comprises a camera CAM, an anomaly detection device APP, and an output device DISP.

The camera CAM is configured to obtain (*i.e.,* acquire) a video VID. The video VID may comprise one or more anomalies (*e.g.*, an explosion, a road accident, an assault, a shoplifting). The video VID may comprise one or more humans in the filmed scene. In a particular embodiment, the video VID may comprise not only images, but also audio features.

The anomaly detection device APP is configured to detect an anomaly in the video VID and, if an anomaly is detected, provide an alarm signal ALM. The alarm signal ALM indicates that an anomaly has been detected in the video VID and, in addition, may comprise the images of the temporal segment of the video VID associated with the detected anomaly.

The output device DISP is configured to output the alarm signal ALM. For instance, the output device DISP may comprise a display and/or a speaker. This output device DISP allows alerting a user that an anomaly is detected in the video VID. Timely anomaly prevention and investigation can therefore be carried out.

The anomaly detection device APP comprises at least one processing unit or processor PROC, and at least one memory MEM.

More particularly, according to an embodiment, the anomaly detection device APP has the hardware architecture of a computer. It may include a processor PROC, a random access memory, a read-only memory MEM, and a non-volatile memory. The memory MEM constitutes a storage medium conforming to the invention. The memory MEM is readable by processor PROC and stores a computer program PROG conforming to the invention. The computer program PROG comprises instructions for implementing the steps of a method conforming to the invention, when the computer program PROG is executed by the processor PROC.

According to the embodiment of FIG. 1, the device APP comprises a communication module COM configured to communicate with the camera CAM, and/or the output device DISP. No limitation is attached to the nature of the communication interfaces between the devices APP, CAM, and DISP, which can be wired or wireless, and can implement any protocol known to the skilled person.

The program PROG implements a machine learning model MOD configured to detect an anomaly in a video, and implements therefore the different modules of the machine learning model MOD. The architecture of the machine learning model MOD and its operation are described in reference to the following figures.

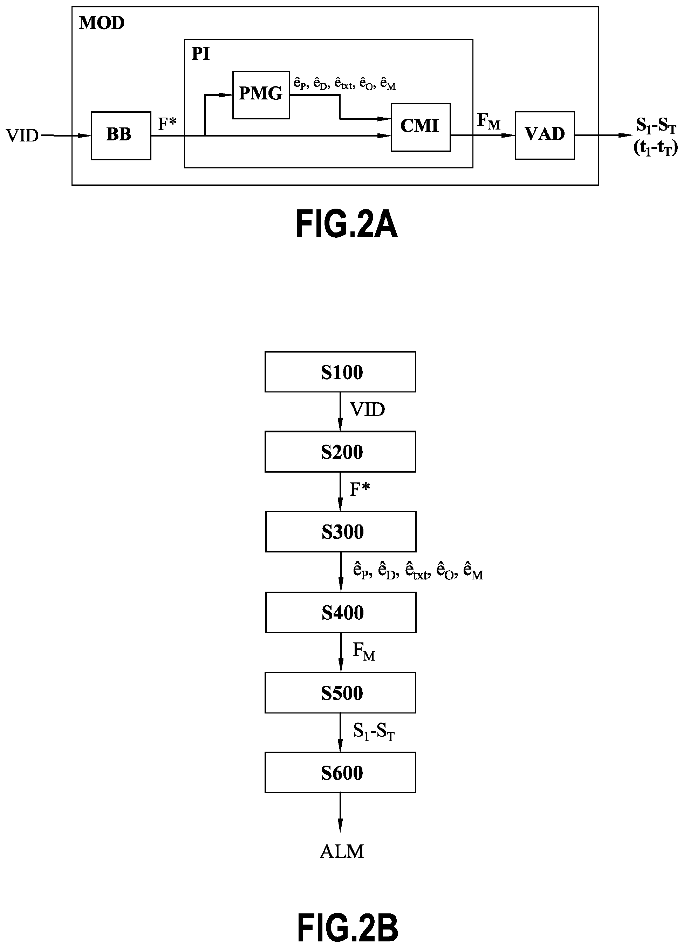

**FIGS. 2A and 2B** illustrate the architecture of a machine learning model and steps of a method for detecting an anomaly in a video according to an embodiment of the invention,

As shown in FIG. 2A, the proposed machine learning model MOD comprises the following modules: a feature extractor BB, a poly-inductor module PI, and a video anomaly detector VAD. More specifically, the poly-inductor module PI comprises (all or part of) a pseudo-modality generation module PMG and a cross-modal induction module CMI. We describe the functions of these different modules in relation to the steps of FIG. 2B.

It should be noted that we describe here an embodiment wherein the poly-inductor module PI is placed between the feature extractor BB and the video anomaly detector VAD. However, the proposed machine learning model MOD could include additional modules, and the proposed poly-inductor module PI could be placed between any two modules of the proposed machine learning model.

As shown in FIG. 2B, the proposed method for detecting an anomaly in a video comprises (all or part of) steps S100-S600 implemented by the detection device APP.

At step S100, the anomaly detection device APP obtains the video VID.

This step may involve the camera CAM acquiring the video VID, and the anomaly detection device APP receiving the video VID from the camera CAM. The anomaly detection device APP may also read the video VID in a shared memory.

At step S200, the feature extractor BB takes as input the video VID and computes an intermediate feature map F* for temporal segments of the video VID. This module is used for extracting spatio-temporal features of the video VID. We have ${F}^{∗} ∈ {ℝ}^{T \times {D}_{i}}$, with T the number of temporal segments and Dᵢ the feature dimension.

In example implementations, the feature extractor BB may be a pre-trained convolutional network, such as the I3D model pre-trained on the Kinetics dataset. Implementation details of such backbone network can found in Carreira et al., "Quo vadis, action recognition? a new model and the kinetics dataset", in the IEEE Conference on Computer Vision and Pattern Recognition (CVPR), 2017.

As previously mentioned, in a particular embodiment, the proposed machine learning model MOD uses audio features of the video VID. In this particular embodiment, the feature extractor BB includes not only a visual feature extractor, but also an audio feature extractor; and the intermediate feature map F* comprises visual and audio features.

At step S300, the pseudo-modality generation module PMG takes as input the intermediate feature map F* and computes one or more modality embeddings for temporal segments of the video VID.

The modality embeddings computed by this module comprise one or more embeddings among: a human pose embedding ê_{P}, a depth embedding ê_{D}, a text embedding êₜₓₜ, a motion embedding ê_{O}, and a segmentation embedding ê_{M} (*i.e.,* panoptic masks). We have ${ê}_{j} ∈ {ℝ}^{T \times {d}_{j}}$, with T the number of temporal segments, dⱼ the embedding dimension, and j ∈ {P, D, txt, O, M}.

We describe hereinafter an embodiment wherein the proposed machine learning model uses all five of these modality embeddings (pose, depth, text, motion, segmentation). However, other embodiments could be envisaged wherein the proposed machine learning model uses any one or more of these five embeddings according to any combination. In a particular embodiment, the pseudo-modality generation module PMG further computes an audio embedding.

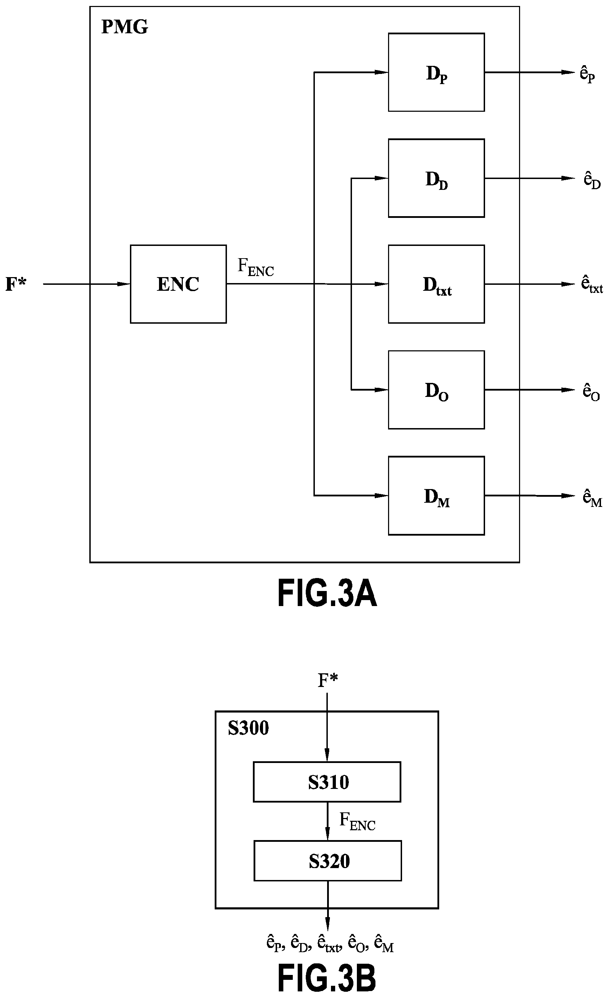

The pseudo-modality generation module PMG allows extracting different modalities of the video VID (pose, depth, text, motion, segmentation). We detail below the architecture and operation of this module reference to FIGS. 3A and 3B.

At step S400, the cross-modal induction module CMI takes as input the intermediate feature map F* and modality embeddings ê_{P}, ê_{D}, êₜₓₜ, ê_{O}, ê_{M}, and computes a multi-modal feature map F_{M} for temporal segments of the video VID. We have F_{M} ∈ ${ℝ}^{T \times {D}_{i}}$, with T the number of temporal segments and Dᵢ the feature dimension.

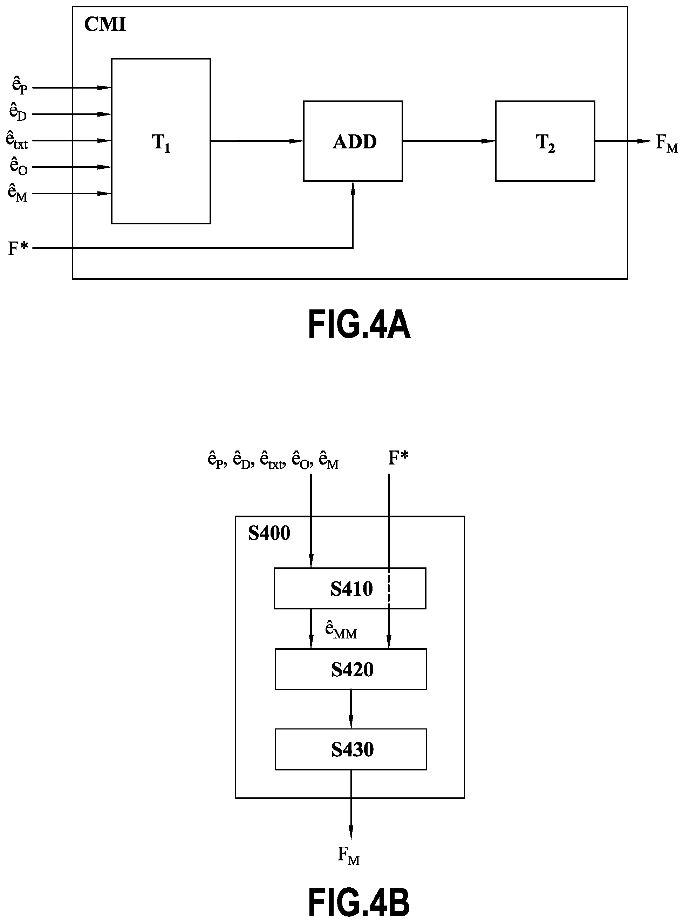

The cross-modal induction module CMI allows infusing the modality embeddings into the intermediate feature map. Thereby, the multi-modal feature map F_{M} not only include RGB features, but also features from the other modalities (pose, depth, text, motion, segmentation). We detail below the architecture and operation of this module in reference to FIGS. 4A and 4B.

At step S500, the video anomaly detector VAD takes as input multi-modal feature map F_{M} and computes anomaly scores S₁-S_{T} for the temporal segments t₁-t_{T} of the video VID (*i.e.,* one anomaly score is obtained for each temporal segment).

For instance, an anomaly score may equal zero for a temporal segment with no anomaly and may equal one for a temporal segment with an anomaly.

In an example implementation, the video anomaly detector VAD uses a fully-connected multi-layer perceptron with a sigmoid activation to compute the anomaly scores S₁-S_{T}. However, other implementations could be envisaged within the scope of the invention.

At step S600, the anomaly detection device APP determines whether an anomaly is present in the video VID.

For example, the device APP can detect an anomaly in one of the temporal segments ti of the video VID, if the anomaly score Sᵢ for this temporal segment tᵢ exceeds a detection threshold. In a particular embodiment, the detection of an anomaly in the video VID triggers the device APP to provide an alarm signal ALM for alerting of the detected anomaly.

We have described here the overall architecture of the proposed machine learning model MOD for detecting an anomaly in a video VID. We detail below the architecture and operation of the pseudo-modality generation module PMG (FIGS. 3A-3B). Then, we will detail those of the cross-modal induction module CMI (FIGS. 4A-4B).

**FIGS. 3A and 3B** illustrate the architecture of the pseudo-modality generation module of the machine learning model and the steps implemented by this module according to an embodiment of the invention.

As shown in FIG. 3A, the pseudo-modality generation module PMG comprises (all or part of) an encoder ENC and decoders D_{P}, D_{D}, Dₜₓₜ, Do, D_{M}. We describe these modules in relation to the steps illustrated in FIG. 3B.

We recall that the pseudo-modality generation module PMG is configured to output - at step S300 - the modality embeddings ê_{P}, ê_{D}, êₜₓₜ, ê_{O}, ê_{M}.

As shown in FIG. 3B, step S300 comprises (all or part of) steps S310-S320.

At sub-step S310, the encoder ENC takes as input the intermediate feature map F* and computes an encoded feature map F_{ENC}.

The encoder ENC may comprise a neural network. In example implementations, the encoder uses a 1D-convolutional layer. This allows projecting the RGB embeddings (*i.e.,* the intermediate feature map F*) to a low-dimensional latent space. However, other implementations could be envisaged.

At sub-step S320, the decoders D_{P}, D_{D}, Dₜₓₜ, Do, D_{M} respectively take as input the encoded feature map F_{ENC} and computes the modality embeddings ê_{P}, ê_{D}, êₜₓₜ, ê_{O}, ê_{M}.

In other words, each one of the decoders D_{P}, D_{D}, Dₜₓₜ, D_{O}, D_{M} respectively provide one of the modality embeddings ê_{P}, ê_{D}, êₜₓₜ, ê_{O}, ê_{M}. In a particular embodiment, the pseudo-modality generation module PMG may further comprise an additional decoder configured to provide an audio embedding. The use of other additional modalities can be envisaged such as a head position embedding, and/or an eye gaze embedding.

The decoders D_{P}, D_{D}, Dₜₓₜ, Do, D_{M} may respectively comprise neural networks. In example implementations, each modality decoder comprises a linear layer and a 1D-convolutional layer. The linear layer allows translating the RGB latent representation (*i.e.*, the encoded feature map F_{ENC}) to a modality-specific representation, while maintaining the dimensionality of the latent space. Subsequently, the 1D-convolutional layer allows generating a modality-specific embedding êⱼ. However, other implementations could be envisaged.

In this embodiment, the pseudo-modality generation module PMG uses an encoder-decoder structure. This allows learning discriminative representations for the different modalities (pose, depth, text, motion, segmentation) to detect anomaly in the video.

More generally, the pseudo-modality generation module PMG allows extracting different modalities of the video VID. The modality embeddings ê_{P}, ê_{D}, êₜₓₜ, ê_{O}, ê_{M} are subsequently used by the cross-modal induction module CMII to augment the RGB features with the additional modalities in order to detect reliably an anomaly.

We have presented how the pseudo-modality generation module PMG computes the modality embeddings ê_{P}, ê_{D}, êₜₓₜ, ê_{O}, ê_{M} that are used to guide the cross-modal induction module CMI. We now detail the architecture of the cross-modal induction module CMI and its operation in reference to the following figures.

**FIGS. 4A and 4B** illustrate the architecture of the cross-modal induction module of the machine learning model and the steps implemented by this module according to an embodiment of the invention.

As shown in FIG. 4A, the cross-modal induction module CMI comprises (all or part of) a first transformer T₁, an adder ADD, and a second transformer T₂. We describe these modules in relation to the steps illustrated in FIG. 4B.

We recall that the cross-modal induction module CMI is configured to output - at step S400 - the multi-modal feature map F_{M}*.

As shown in FIG. 4B, step S400 comprises (all or part of) steps S410-S430.

At sub-step S410, the first transformer T₁ takes as input the modality embeddings ê_{P}, ê_{D}, êₜₓₜ, ê_{O}, ê_{M} and computes the multi-modal embedding ê_{MM}.

More specifically, the different modality embeddings are concatenated along the embedding dimension and then provided to the first transformer T₁.

The first transformer T₁ uses the different modality embeddings ê_{P}, ê_{D}, êₜₓₜ, ê_{O}, ê_{M} to provide a single multi-modal embedding ê_{MM}.. This transformer allows encoding the cross-correlations between the different modalities and highlighting the most pertinent modalities.

At sub-step S420, the adder ADD adds the multi-modal embedding ê_{MM} and the intermediate feature map F*.

This allows augmenting the RGB features (*i.e.,* the intermediate feature map F*) with contextually relevant information from the different modalities (*i.e.,* the multi-modal embedding ê_{MM}).

At sub-step S430, the second transformer T₂ takes as input the sum of the multi-modal embedding ê_{MM} and the intermediate feature map F*, and computes the multi-modal feature map F_{M}.

This second transformer T₂ creates a shared representation space (between the RGB modality and the additional ones) that promotes all relevant features for the video anomaly detection task. This multi-modal feature map F_{M} provides a discriminative representation that benefits from the different modalities and allows detecting reliably an anomaly in the video VID.

Experimental results show that the proposed solution contributes to improving the reliability of video anomaly detection. However, before presenting these experimental results, we describe the proposed method for training the machine learning model MOD.

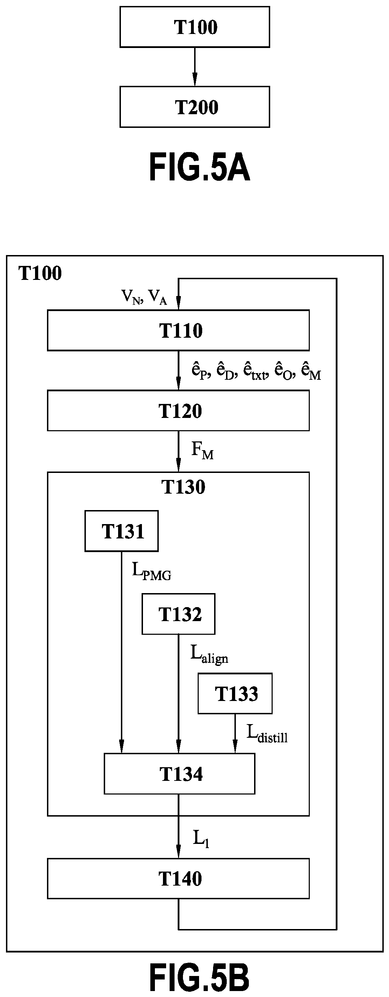

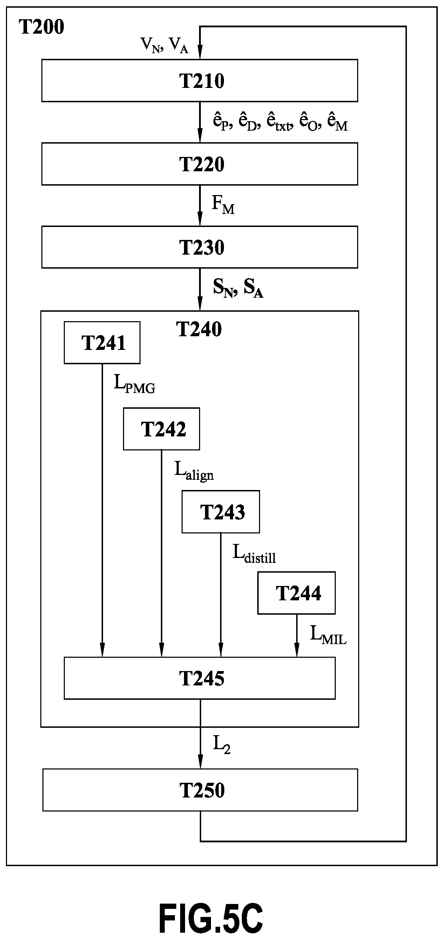

**FIGS. 5A, 5B****, and** **5C** illustrate steps of a method for training a machine learning model used for detecting an anomaly in a video according to an embodiment of the invention.

Weak supervision is used in this embodiment for training the proposed machine learning model MOD. That is, a set of reference videos with video-level labels is used. Such a reference video is either labelled as a normal video (with no anomaly), or as anomaly video (containing an anomaly) but without temporal localization of the anomaly.

The proposed model MOD is used not only to detect an anomaly in a video but also to localize temporally the anomaly (*i.e.,* it provides an anomaly score for each one of the temporal segments of the video). It is therefore important to note that the proposed training method allows, using only reference videos with video-level labels, to optimize the proposed model MOD to temporally localize an anomaly in a video.

The proposed training method does not require any temporal annotations of the reference videos for optimizing the proposed model MOD. This contributes to reducing the human labor required to train the model for video anomaly detection.

A teacher-student approach is used in this embodiment for training the proposed machine learning model MOD. That is, the proposed machine learning model (*i.e.,* the student) is trained using a pre-trained video anomaly detection model (*i.e.,* the teacher). The used teacher-student approach is detailed below in reference to step T133 and T243.

As shown in FIG. 5A, the proposed training method comprises (all or part of) a preliminary training phase T100 and a subsequent training phase T200.

Specifically, the preliminary training phase T100 of the proposed machine learning model MOD allows the pseudo-modality generation module PMG and the cross-modal induction module CMI to be correctly initialized. Then, the subsequent training phase T200 allows optimizing the machine learning model MOD to detect reliably anomalies in videos and to localize temporally these anomalies. We detail below training phases T100 and T200 in reference to FIGS. 5B and 5C.

As shown in FIG. 5B, the preliminary training phase T100 comprises one or more iterations of (all or part of) of steps T110-T150.

At step T110, one or more modality embeddings ê_{P}, ê_{D}, êₜₓₜ, ê_{O}, ê_{M} (pose, depth, text, motion, segmentation) are computed for temporal segments of the reference videos V_{N}, V_{A} - in a similar manner to step S300.

In addition, one or more modality embeddings e_{P}, e_{D}, eₜₓₜ, eo, e_{M} are extracted for temporal segments of the reference videos V_{N}, V_{A} using respectively one or more dedicated models. That is, different pre-trained modality-specific backbones are used for extracting the modality embeddings e_{P}, e_{D}, eₜₓₜ, eo, e_{M}. Implementation details for such dedicated models can be found in the following documents.

For the human pose embedding, the YOLOV7-pose model can be used as presented in Wang et al., "Yolov7: Trainable bag-of-freebies sets new state-of-the-art for real-time object detectors", IEEE/CVF conference on computer vision and pattern recognition, 2023.

For the depth embedding, the DepthAnythingV2 model can be used as presented in Yang et al., "Depth anything v2". 2024.

For the text embedding, the VifiCLIP model can be used as presented in Rasheed et al., "Fine-tuned clip models are efficient video learners", IEEE/CVF Conference on Computer Vision and Pattern Recognition, 2023.

For the motion embedding, the RAFT model can be used as presented in Teed et al., "Raft: Recurrent all-pairs field transforms for optical flow", Computer Vision-ECCV, 2020.

And, for the segmentation embedding, the SAM model can be used as presented in Kirillov et al., "Segment anything", IEEE/CVF International Conference on Computer Vision, 2023.

At step T120, a multi-modal feature map F_{M} is computed for temporal segments of the reference videos V_{N}, V_{A}- in a similar manner to step S400.

At step T130, a preliminary loss function L₁ is evaluated based on the modality embeddings ê_{P}, ê_{D}, êₜₓₜ, ê_{O}, ê_{M} and the multi-modal feature map F_{M} computed by the proposed model MOD. To this end, step T130 comprises (all or part of) steps T131-T134.

At step T131, a loss component L_{PMG} is evaluated based on the modality embeddings ê_{P}, ê_{D}, êₜₓₜ, ê_{O}, ê_{M} computed by the proposed model MOD and the modality embeddings e_{P}, e_{D}, eₜₓₜ, eo, e_{M} extracted by the dedicated models.

The following expression can be used: ${L}_{PMG} = {\sum }_{j = 1}^{5} \frac{1}{{d}_{j}} {\sum }_{k = 1}^{{d}_{j}} {\left({\hat{e}}_{j , k}-{e}_{j , k}\right)}^{2}$
wherein j ∈ {P, D, txt, O, M}.

This loss component L_{PMG} allows optimizing the pseudo-modality generation module PMG to generate precisely the different modality embeddings.

At step T132, a loss component L_{align} based on the modality embeddings ê_{P}, ê_{D}, êₜₓₜ, ê_{O}, ê_{M} and the intermediate feature map F* computed by the proposed model MOD. The intermediate feature map F* is computed by the feature extractor BB for temporal segments of the reference videos V_{N},V_{A} - in a similar manner to step S200 described above.

In a particular embodiment, the loss component L_{align} is based on a contrastive loss as follows. The loss component L_{align} uses similarity measures expressed by: $sim \left(F*\left({t}_{i}\right),{\hat{e}}_{j}\left({t}_{i}\right)\right) = \frac{F * \dot{\left({t}_{ι}\right)} ⋅ {\hat{e}}_{j} \left({t}_{i}\right)}{\left‖F*\dot{\left({t}_{ι}\right)}\right‖ \left‖{\hat{e}}_{j}\left({t}_{i}\right)\right‖} ,$
where tᵢ is the i-th temporal segment.

For the j-th modality, the contrastive alignment loss is expressed by: ${L}_{infoNCE} \left(j\right) = - \frac{1}{T} {\sum }_{i = 1}^{T} \frac{exp \left(\frac{sim \left(F*\left({t}_{i}\right),{\hat{e}}_{j}\left({t}_{i}\right)\right)}{τ}\right)}{{\sum }_{k = 1 , k \neq i}^{T} exp \left(\frac{sim \left(F*\left({t}_{i}\right),{\hat{e}}_{j}\left({t}_{i}\right)\right)}{τ}\right)} ,$
where *τ* is positive real number.

The loss component L_{align} is then expressed by: ${L}_{align} = {\sum }_{j = 1}^{5} {L}_{infoNCE} \left(j\right) ,$
where j ∈ {P, D, txt, O, M}.

The loss component L_{align} allows the different modality embeddings to be aligned with the RGB embeddings. Thereby, a latent space shared between the different modalities and the RGB embeddings can be learned. This contributes to improving the ability of the proposed model to effectively use the features of the different modalities for anomaly detection.

At step T133, a loss component L_{distill} is evaluated based on the multi-modal feature map F_{M} computed by the proposed model MOD and a feature map F_{teach} computed by another pre-trained machine learning model.

More specifically, a teacher-student approach is used in this step. That is, the proposed machine learning model MOD (*i.e.*, the student) is trained using another model pre-trained for video anomaly detection (*i.e.*, the teacher).

The following expression can be used: ${L}_{distill} = \frac{1}{{D}_{i}} {\sum }_{k = 1}^{{D}_{i}} {\left({F}_{M , k}-{F}_{teach , k}\right)}^{2} ,$

This distillation process guides the multi-modal feature map F_{M} computed by the proposed model MOD towards a representation optimized for video anomaly detection. As a result, robust anomaly detection is achieved even with limited data and supervision

At step T134, the preliminary loss function L₁is evaluated based on loss components L_{PMG}, L_{atign}, and L_{distill} (*e.g.*, L₁= L_{PMG} + L_{align} + L_{distill}).

At step T140, parameters of the machine learning model MOD are updated to minimize the preliminary loss function L₁.

For example, as previously mentioned, the proposed machine model MOD can be implemented using neural networks, and the weights of the neural networks can be updated using backpropagation (except for pre-trained modules). Other parameters of the machine learning model MOD could also be updated to minimize the loss function L₁, such as the number of neurons, or the number of layers.

The preliminary training phase T100 of the machine learning model MOD allows the pseudo-modality generation module PMG and the cross-modal induction module CMI to be correctly initialized before optimizing the machine learning model MOD for the video anomaly detection task. This allows avoiding possible pitfalls in which one of the modalities could overpower the other ones.

Then, the proposed machine learning model MOD is specifically optimized for the video anomaly detection task. That is, the subsequent training phase T200 is performed.

As shown in FIG. 5C, the subsequent training phase T200 comprises one or more iterations of (all or part of) steps T210-T250.

At step T210, one or more modality embeddings ê_{P}, ê_{D}, êₜₓₜ, ê_{O}, ê_{M} (pose, depth, text, motion, segmentation) are computed for temporal segments of the reference videos V_{N}, V_{A} - in a similar manner to step S300.

In addition, one or more modality embeddings e_{P}, e_{D}, eₜₓₜ, eo, e_{M} are extracted for temporal segments of the reference videos V_{N}, V_{A} using respectively the one or more dedicated models - in a similar manner to T110.

At step T220, a multi-modal feature map F_{M} are computed for temporal segments of the reference videos V_{N}, V_{A}- in a similar manner to step S400.

At step T230, anomaly scores S_{N} and S_{A} are respectively obtained for the temporal segments of the normal reference videos V_{N} and the anomaly reference videos V_{A}. The anomaly scores S_{N}, S_{A} are obtained using the proposed machine learning model MOD (*i.e.,* by implementing the steps S100-S500 previously described).

At step T240, a loss function L₂ is evaluated based on the modality embeddings ê_{P}, ê_{D}, êₜₓₜ, ê_{O}, ê_{M}, the multi-modal feature map F_{M}, and the anomaly scores S_{N}, S_{A}. To this end, step T230 comprises (all or part of) steps T231-T235 described below.

At step T241, the loss component L_{PMG} is evaluated based on the modality embeddings ê_{P}, ê_{D}, êₜₓₜ, ê_{O}, ê_{M} computed by the proposed model MOD and the modality embeddings e_{P}, e_{D}, eₜₓₜ, eo, e_{M} extracted by the dedicated models - in a similar manner to step T131.

At step T242, the loss component L_{align} is evaluated based on the modality embeddings ê_{P}, ê_{D}, êₜₓₜ, ê_{O}, ê_{M} and the intermediate feature map F* computed by the proposed model MOD - in a similar manner to step T132.

At step T243, the loss component L_{distill} is evaluated based on the multi-modal feature map F_{M} computed by the proposed model MOD *(i.e.,* the student) and the feature map F_{teach} computed by the pre-trained video anomaly detection model *(i.e.,* the teacher) - in a similar manner to step T133.

At step T244, a loss component L_{MIL} is evaluated based on the anomaly scores S_{N},S_{A}.

The loss component L_{MIL} can be evaluated with standard loss functions commonly used for weakly supervised training of video anomaly detection model. For instance, such a loss function is presented in Zhou et al., "Dual memory units with uncertainty regulation for weakly supervised video anomaly detection", 2023*.*

At step T245, the preliminary loss function L₂ is evaluated based on loss components L_{PMG}, L_{align}, L_{distill}, and L_{MIL}. For instance, L₂= L_{PMG} + λ₁· L_{align} + λ₂· L_{distill} + L_{MIL}. Parameters λ₁ and λ₂ are positive real numbers.

At step T250, parameters of the machine learning model MOD are updated to minimize the loss function L₂.

For example, as previously mentioned, the proposed machine model MOD can be implemented using neural networks, and the weights of the neural networks can be updated using backpropagation (except for pre-trained modules). Other parameters of the machine learning model MOD could also be updated to minimize the loss function L₂, such as the number of neurons, or the number of layers.

Experimental results show that the proposed model MOD is capable (once trained) of detecting reliably anomalies. We present below these experimental results.

**Tables 1 and 2** illustrate experimental results related to the proposed machine learning model for detecting an anomaly in a video according to embodiments of the invention.

Here, the performance of the proposed machine learning model MOD is evaluated on the UCF-Crime and XD violence datasets. Before presenting the results of these experiments, we first describe some of the implementation details used in these experiments.

The implementation of the proposed model MOD in these experiments is as follows.

The proposed poly-inductor module PI (comprising the pseudo-modality generation modules PMG and the cross-modal induction module CMI) is placed at the early stage and the late stage of a UR-DMU model. This model is presented in the document Zhou *et al.* mentioned above. The audio features contained in the XD-Violence dataset are considered as an additional modality and aligned with the other modalities by the poly-inductor module PI.

For the training, the UR-DMU model is employed as a teacher. The batch size is set to 16, equally split between normal and abnormal videos. The student model and the poly-inductor modules PI (at early and late stages) are trained for 50 epochs for the preliminary training phase T100 and 75 epochs for the subsequent training phase T200. Parameters λ1 and λ2 are set to 0.2 and 0.1 respectively, while the learning rate of the AdamW optimizer is set to 10⁻⁵. The dedicated models used for extracting the different modality embeddings are the ones mentioned above (*i.e.,* YOLOV7-pose, DepthAnythingV2, VifiCLIP, RAFT, SAM models).

**Table 1 compares the performance of the proposed machine learning model MOD to those of state-of-the-art solutions.**

| **Model** | **Encoder** | **UFC-Crime** | | **XD-Violence** | |
|---|---|---|---|---|---|
| | | **AUC** | **AUC_{A}** | **AP** | **AP_{A}** |
| *Solutions with multiple modalities* | | | | | |
| VadCLIP | CLIP | 88.02 | 70.23 | 84.15 | - |

| *Solutions with RGB-only* | | | | | |
|---|---|---|---|---|---|
| UR-DMU | I3D | 86.97 | 70.81 | 81.66 | 83.94 |
| TSA | CLIP | 87.58 | - | 82.17 | - |
| **Proposed Model** | **I3D** | **90.33** | **77.77** | **85.7** | **85.79** |

Here, the performance indicators are the following ones: the frame-level Area Under Curve (AUC), the frame-level AUC for anomaly videos only (AUC_{A}), the frame-level Average Precision (AP), the frame-level AP for anomaly videos only (AP_{A}).

Specifically, the considered state-of-the-art solutions are: (i) the VadCLIP model presented in Wu et al., "VadCLIP: Adapting vision-language models for weakly supervised video anomaly detection", AAAI Conference on Artificial Intelligence, 2024; (ii) the UR-DMU model presented in the document Zhou *et al.* mentioned above; and (iii) the TSA model presented in Hyekang et al., "Clip-tsa: Clip-assisted temporal self-attention for weakly-supervised video anomaly detection". IEEE International Conference on Image Processing, 2023. The UR-DMU and TSA models used RGB-only features, whereas the VadCLIP model uses RGB and language features.

The experimental results show that that the proposed solution achieves significant performance gains over existing solutions in terms of anomaly detection reliability. The proposed solution demonstrates superior reliability for detecting anomalies in both UCF-Crime and XD-Violence datasets.

Similar experiments have been conducted on the public datasets MSAD dataset and considering multiple other state-of-the-art solutions. The results of these experiments corroborate the above conclusions.

It should also be noted that the proposed solution has a low complexity of implementation. Although it requires more computing resources than the baseline solution using only RGB features, the proposed solution achieves real-time performance, processing at 30 frames per second, and can be deployed in practical systems.

**Table 2 evaluates the contributions of the different modalities.**

| **Pose** | **Depth** | **Modality Text** | **Segment.** | **Motion** | **UFC-Crime AUC** |
|---|---|---|---|---|---|
| - | - | - | - | - | 86.97 |
| ✔ | - | - | - | - | 87.65 |
| - | ✔ | - | - | - | 87.75 |
| - | - | ✔ | - | - | 87.89 |
| - | - | - | ✔ | - | 87.71 |
| - | - | - | - | ✔ | **87.92** |
| ✔ | ✔ | - | - | - | 88.14 |
| ✔ | ✔ | ✔ | - | - | 88.85 |
| ✔ | ✔ | ✔ | ✔ | - | 90.31 |
| ✔ | ✔ | ✔ | ✔ | ✔ | **90.33** |

This table shows that each modality enhances the baseline performance on the UCF-Crime dataset. This table also shows the benefits of combining multiple modalities for video anomaly detection.

In conclusion, the results of extensive experiments conducted on various standard datasets demonstrate that the proposed solution achieves significant performance gains over state-of-the-art solutions. It outperforms state-of-the-art solutions in terms of overall anomaly detection reliability.

**Additional Variants:** Although the present invention has been described above with reference to certain specific embodiments, it will be understood that the invention is not limited by the particularities of these embodiments. Numerous variations, modifications, and developments may be made in these embodiments within the scope of the claims.

## Claims

1. A computer-implemented method for detecting an anomaly in a video (VID) using a machine learning model (MOD), the method comprising:
- a step (S300) of computing one or more modality embeddings (ê_{P}, ê_{D}, êₜₓₜ, ê_{O}, ê_{M}) of the video (VID) among: a human pose embedding (ê_{P}), a depth embedding (ê_{D}), a text embedding (êₜₓₜ), a motion embedding (ê_{O}), and a segmentation embedding (ê_{M}),
wherein the one or more modality embeddings (ê_{P}, ê_{D}, êₜₓₜ, ê_{O}, ê_{M}) are computed (S300) based on an intermediate feature map (F*) of the video (VID) using a modality generation module (PMG) of the machine learning model (MOD), and this step (S300) comprises:
o a sub-step (S310) of computing an encoded feature map (F_{ENC}) based on the intermediate feature map (F) using an encoder (ENC) of the modality generation module (PMG),
o a sub-step (S320) of computing the one or more modality embeddings (ê_{P}, ê_{O}, êₜₓₜ, ê_{O}, ê_{M}) based on the encoded feature map (F_{ENC}) using respectively one or more decoders (D_{P}, D_{D}, Dₜₓₜ, D_{O}, D_{M}) of the modality generation module (PMG),
- a step (S500) of computing anomaly scores (S₁-S_{T}) for temporal segments (t₁-t_{T}) of the video (VID) based on the one or more modality embeddings (ê_{P}, ê_{D}, êₜₓₜ, ê_{O}, ê_{M}).

2. The method according to claim 1, wherein the encoder (ENC) of the modality generation module (PMG) comprises a neural network, and/or the one or more decoders (D_{P}, D_{D}, Dₜₓₜ, D_{O}, D_{M}) of the modality generation module (PMG) comprises respectively a neural network.

3. The method according to claim 1 or 2, comprising:
- a step (S400) of computing a multi-modal feature map (F_{M}) of the video (VID) based on the intermediate feature map (F*) and the one or more modality embeddings (ê_{P}, ê_{D}, êₜₓₜ, ê_{O}, ê_{M}) using a cross-modal module (CMI) of the machine learning model (MOD),
and wherein:
- the step (S500) of computing the anomaly scores (S₁-S_{T}) for the temporal segments (t₁-t_{T}) of the video (VID) is based on the multi-modal feature map (F_{M}).

4. The method according to claim 3, wherein the cross-modal module (CMI) comprises one or more transformers (T₁, T₂).

5. The method according to claim 4, wherein the step (S400) of computing the multi-modal feature map (F_{M}) comprises:
- a sub-step (S410) of computing a multi-modal embedding (e_{MM}) based on the one or more modality embeddings (ê_{P}, ê_{D}, êₜₓₜ, ê_{O}, ê_{M}) using a transformer (T₁) of the cross-modal module (CMI), and
- a sub-step (S430) of computing the multi-modal feature map (F_{M}) based on a sum of the intermediate feature map (F*) and the multi-modal embedding (e_{MM}) using another transformer (T₂) of the cross-modal module (CMI).

6. A computer-implemented method for training a machine learning model (MOD) for detecting an anomaly in a video (VID), the method comprising a training phase (T200) including one or more iterations of:
- a step (T230) of computing anomaly scores (S_{N}, S_{A}) for temporal segments of reference videos (V_{N}, V_{A}) using the method of any of claims 1 to 5, the reference videos (V_{N}, V_{A}) being labelled with video-level labels and including normal videos (V_{N}) and anomaly videos (V_{A}),
- a step of evaluating (T240) a loss function (L₂) including a loss component (L_{MIL}) based on the computed anomaly scores (S_{N}, S_{A}) for the reference videos (V_{N}, V_{A}),
- a step of updating (T250) parameters of the machine learning model (MOD) to minimize the loss function (L₂).

7. The method according to claim 6, wherein the loss function (L₂) includes a loss component (L_{PMG}) based on:
- one or more modality embeddings (ê_{P}, ê_{D}, êₜₓₜ, ê_{O}, ê_{M}) of the reference videos (V_{N}, V_{A}) computed using the method of any of claims 1 to 5, and
- one or more modality embeddings (e_{P}, e_{D}, eₜₓₜ, e_{O}, e_{M}) extracted from the reference videos (V_{N}, V_{A}) respectively by one or more dedicated models.

8. The method according to claim 6 or 7, wherein the loss function (L₂) includes a loss component (L_{align}) based on:
- one or more modality embeddings (ê_{P}, ê_{D}, êₜₓₜ, ê_{O}, ê_{M}) of the reference videos (V_{N}, V_{A}) computed using the method of any of claims 1 to 5, and
- an intermediate feature map (F*) of the reference videos (V_{N}, V_{A}).

9. The method according to any of claims 6 to 8, wherein the loss function (L₂) includes a loss component (L_{distill}) based on:
- a multi-modal feature map (F_{M}) of the reference videos (V_{N}, V_{A}) computed using the method of any of claims 3 to 5, and
- another feature map (F_{teach}) of the reference videos (V_{N}, V_{A}) computed by a pre-trained model.

10. The method according to any of claims 6 to 9, comprising a preliminary training phase (T100) including one or more iterations of:
- a step (T110) of computing one or more modality embeddings (ê_{P}, ê_{D}, êₜₓₜ, ê_{O}, ê_{M}) of the reference videos (V_{N}, V_{A}) using a modality generation module (PMG) of the machine learning model (MOD),
- a step (T120) of computing a multi-modal feature map (F_{M}) of the reference videos (V_{N}, V_{A}) using a cross-modal module (CMI) of the machine learning model (MOD),
- a step (T130) of evaluating a preliminary loss function (L₁) based on the computed one or more modality embeddings (ê_{P}, ê_{D}, êₜₓₜ, ê_{O}, ê_{M}) and the computed multi-modal feature map (F_{M}) of the reference videos (V_{N}, V_{A}), and
- a step of updating (T140) parameters of the machine learning model (MOD) to minimize the preliminary loss function (L₁).

11. The method according to any of claims 1 to 10, wherein the modality embeddings (ê_{P}, ê_{D}, êₜₓₜ, ê_{O}, ê_{M}) comprise multiple or all embeddings among: the human pose embedding (ê_{P}), the depth embedding (ê_{D}), the text embedding (êₜₓₜ), the motion embedding (ê_{O}), and the segmentation embedding (ê_{M}).

12. The method according to any of claims 1 to 11, wherein the modality embeddings (ê_{P}, ê_{D}, êₜₓₜ, ê_{O}, ê_{M}) further comprise an audio embedding.

13. A device (APP) for detecting an anomaly in a video (VID), the device (APP) comprising at least one processor (PROC) and a memory (MEM), the device (APP) being configured to implement a machine learning model (MOD) comprising:
- a modality generation module (PMG) configured to compute (S300) one or more modality embeddings (ê_{P}, ê_{D}, êₜₓₜ, ê_{O}, ê_{M}) of the video (VID) among: a human pose embedding (ê_{P}), a depth embedding (ê_{D}), a text embedding (êₜₓₜ), a motion embedding (ê_{O}), and a segmentation embedding (ê_{M}),
wherein the modality generation module (PMG) comprises:
o an encoder (ENC) configured to compute (S310) an encoded feature map (F_{ENC}) based on an intermediate feature map (F*) of the video (VID), and
∘ one or more decoders (D_{P}, D_{D}, Dₜₓₜ, Do, D_{M}) configured respectively to compute (S320) the one or more modality embeddings (ê_{P}, ê_{D}, êₜₓₜ, ê_{O}, ê_{M}) based on the encoded feature map (F_{ENC}), and
- a detector (VAD) configured to compute (S500) anomaly scores (S₁-S_{T}) for temporal segments (t₁-t_{T}) of the video (VID) based on the one or more modality embeddings (ê_{P}, ê_{D}, êₜₓₜ, ê_{O}, ê_{M}).

14. A surveillance system (SYS) comprising:
- a camera (CAM) for obtaining a video (VID),
- a device (APP) according to claim 13 for detecting an anomaly in the video (VID).

15. A computer program (PROG) comprising instructions which, when the program (PROG) is executed by at least one processor (PROC), cause said at least one processor (PROC) to implement the method according to any of claims 1 to 12.
